# FASCICULE DE BREVET EUROPEEN

(11) **EP 0 638 198 B1**
(45) Date de publication et mention de la délivrance du brevet: **17.06.1998**
(21) Numéro de dépôt: 93911837.8
(22) Date de dépôt: 29.04.1993
(51) Int. Cl.: G21C 19/02, G21C 17/003

(54) **DISPOSITIF PORTE-OUTILS POUR UN COUVERCLE DE CUVE DE REACTEUR NUCLEAIRE**
WERKZEUGHALTERUNG FÜR DEN DECKEL EINES KERNREAKTORDRUCKGEFÄSSES
TOOL HOLDER DEVICE FOR A NUCLEAR REACTOR VESSEL COVER

(30) Priorité: 29.04.1992 FR 9205317
(43) Date de publication de la demande: 15.02.1995
(73) Titulaire: JEUMONT INDUSTRIE, F-92058 Paris-La Défense (FR)
(72) Inventeur: DREAN, Henri, F-75016 Paris (FR); MASSON, Joel, F-59600 Maubeuge (FR)
(74) Mandataire: Corret, Hélène
(86) Numéro de dépôt international: FR9300421
(87) Numéro de publication internationale: WO9322772

(56) Documents cités:
- FR-A- 1 211 626
- FR-A- 2 591 210
- FR-A- 2 638 386
- US-A- 4 973 443

## Description

L'invention concerne un dispositif porte-outils destiné à être placé sous un couvercle de cuve de réacteur nucléaire.

On sait qu'une cuve de réacteur est une enceinte de pression contenant le fluide primaire et supportant le coeur par l'intermédiaire des équipements internes. Elle se compose de la cuve proprement dite et d'un couvercle amovible maintenu par une série de goujons bridant l'ensemble des deux pièces.

La calotte sphérique du couvercle est percée de trous servant à la mise en place des adaptateurs pour les mécanismes des grappes de contrôle et des colonnes d'instrumentation.

Le couvercle est, de façon périodique, détaché de la cuve et déposé sur l'aire de visite des couvercles de cuve. Le couvercle est déposé en appui sur sa périphérie, sur un support qui peut par exemple également servir de protection biologique. Un accès est ménagé à travers ce dispositif de protection, de façon à pouvoir accéder sous le couvercle et ainsi procéder notamment à des opérations de maintenance. Le niveau d'irradiation est tel qu'il n'est pas possible d'envisager une intervention humaine. C'est pourquoi l'invention concerne un dispositif permettant de positionner des outils d'intervention sous les adaptateurs équipant le couvercle d'une cuve, de façon entièrement automatique.

L'invention a donc pour objet un dispositif pour le support et le positionnement d'outils agencés pour intervenir sur des adaptateurs de couvercle de cuve de réacteur nucléaire, destiné à être placé sur une aire de visite dudit couvercle selon la revendication 1.

De façon préférée, le dispositif comporte des moyens montés en rotation sur ledit chariot pour basculer ledit outil par rapport audit chariot et le placer en position sensiblement parallèle ou sensiblement perpendiculaire audit rail transversal.

Egalement de façon préférée, le dispositif comporte des moyens pour la montée ou la descente dudit outil par rapport audit chariot.

Selon un premier mode de réalisation de l'invention, le chariot supporte une console.

Dans une première forme de réalisation, les moyens de basculement sont constitués par un arbre de manoeuvre entraîné manuellement et qui entraîne en rotation un réducteur, solidaire du bâti du chariot, entraînant lui-même en rotation un pignon, lié à la console.

Dans une deuxième forme de réalisation, l'arbre de manoeuvre est remplacé par un motoréducteur.

Dans une première variante, la console est constituée par une colonne extérieure de guidage et une colonne intérieure coaxiale, supportant au moins un outil.

Les moyens pour la descente ou la montée dudit outil sont alors constitués par des moyens assurant le mouvement de translation de la colonne intérieure par rapport à la colonne extérieure, qui est fixe par rapport au bâti.

Dans une forme de réalisation, ces moyens assurant la translation sont constitués par des galets, placés entre la colonne intérieure et la colonne extérieure, et par un motoréducteur, solidaire du bâti du chariot, entraînant un pignon lié en rotation avec l'essieu du chariot, sur lequel est claveté un pignon conique assurant un renvoi d'angle avec des moyens liés en rotation avec une vis ayant le même axe que les colonnes et qui est en prise avec un écrou lié à la colonne intérieure, le mouvement de rotation de la vis assurant ainsi le mouvement de translation de la colonne intérieure par rapport à la colonne extérieure.

Dans une deuxième variante de réalisation de l'invention, la console est constituée par un vérin.

De façon préférée, le cylindre est solidaire d'un anneau supporté par deux colonnes, disposées selon un diamètre, l'anneau pouvant tourner autour de deux axes à 90° l'un de l'autre, par l'intermédiaire de deux jeux de tourillons.

De préférence, l'anneau est supporté par les colonnes par l'intermédiaire de moyens élastiques.

De façon préférée également, la partie inférieure du cylindre présente une embase qui est articulée sur le cylindre par l'intermédiaire d'une rotule.

Dans un deuxième mode de réalisation, le chariot supporte un ensemble télémanipulateur robotisé.

De préférence, les moyens de positionnement en rotation et en translation comprennent également un codeur pour suivre le déplacement dudit chariot.

Egalement de façon préférée, sont prévues deux visées optiques disposées selon deux directions perpendiculaires et assurant un positionnement précis dudit chariot.

L'invention sera mieux comprise et d'autres buts, avantages et caractéristiques de celle-ci apparaîtront plus clairement à la lecture de la description qui suit et qui est faite au regard des dessins annexés sur lesquels:

La Figure 1 représente schématiquement un dispositif selon l'invention, en position sous le couvercle d'une cuve de réacteur nucléaire. Elle comprend le détail A.

La Figure 2 représente une vue de gauche d'une première variante d'un premier mode de réalisation du chariot du dispositif selon l'invention.

La Figure 3 représente une coupe selon III-III de la Figure 2.

La Figure 4 représente une vue de droite du chariot de la première variante de réalisation du dispositif selon l'invention.

La Figure 5 représente une coupe selon V-V de la Figure 4.

La Figure 6 est une vue de gauche d'un chariot selon une deuxième variante d'un premier mode de réalisation du dispositif selon l'invention.

La Figure 7 est une vue en coupe selon VII-VII de la Figure 6, et

La Figure 8 représente un chariot selon un deuxième mode de réalisation du dispositif selon l'invention.

Sur les différentes Figures, seuls sont représentés les éléments nécessaires à la définition du dispositif selon l'invention et à la compréhension de son fonctionnement. Les éléments communs aux Figures sont désignés par les mêmes références.

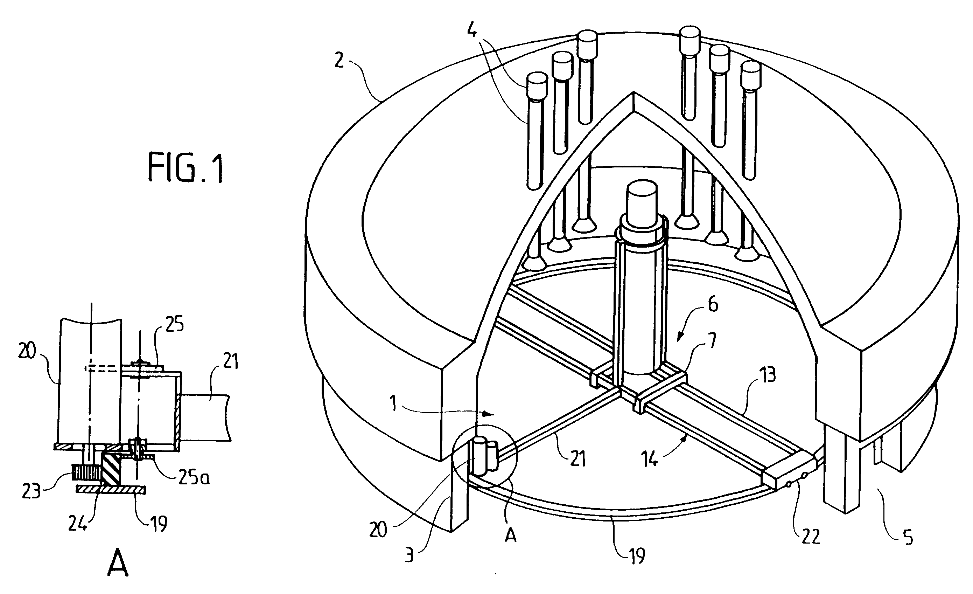

En référence à la Figure 1, le dispositif 1 selon l'invention pour le support et le positionnement d'outils est en position sous le couvercle 2 d'une cuve de réacteur nucléaire, lequel a précédemment été détaché de la cuve et déposé sur l'aire de visite des couvercles de cuve. Dans l'exemple représenté, le couvercle est en appui sur un support 3 qui fait fonction de protection biologique.

Un certain nombre d'adaptateurs 4 pour les mécanismes des grappes de contrôle, ont été représentés sur la Figure 1. Ces adaptateurs sont soudés au couvercle et pénètrent partiellement à l'intérieur de celui-ci. Ils supportent des manchettes thermiques. Le dispositif 1 est destiné à supporter et positionner des outils qui interviendront sur la partie des adaptateurs 4, interne au couvercle.

Le dispositif 1 selon l'invention comprend un chariot 6 ainsi que des moyens permettant le positionnement de ce chariot en rotation et en translation.

On peut noter qu'un accès 5 est ménagé dans la protection biologique 3 pour permettre le passage du chariot 6.

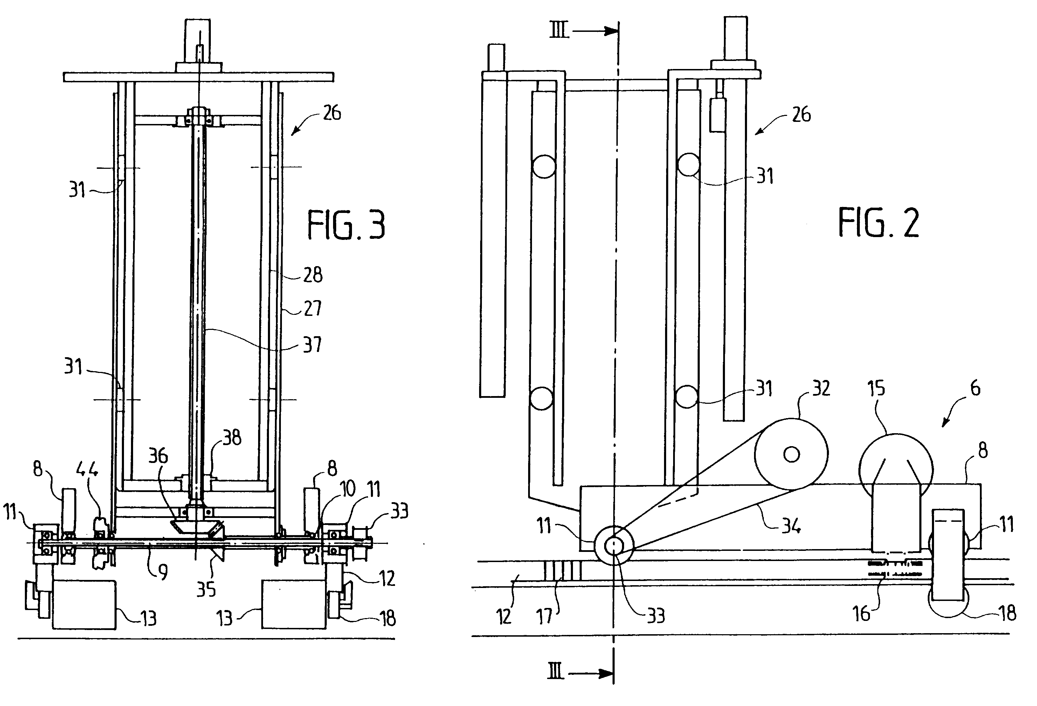

Si l'on se réfère également aux Figures 2 et 3, on constate que le chariot 6 comprend un bâti 7 présentant deux flasques 8 ainsi qu'un essieu. Celui-ci est constitué d'un arbre 9 qui repose sur les flasques 8 du bâti par l'intermédiaire de roulements à billes 10. Des galets 11 sont montés sur l'arbre 9 et roulent sur les rails 12 qui sont solidaires des deux poutres 13 constituant la traverse 14.

Les moyens de positionnement en translation du chariot 6 comprennent d'une part, la traverse 14 et d'autre part, un premier motoréducteur 15 solidaire du bâti 7 du chariot et qui entraîne un premier pignon cranté 16. Ce premier pignon 16 engrène sur des moyens 17 solidaires d'un des rails transversaux 12. Ces moyens peuvent être constitués par une crémaillère ou encore une courroie crantée.

Le motoréducteur 15 peut par exemple être du type à courant continu et frein actif.

On prévoit de préférence des contre-galets 18 qui empêchent le chariot 6 de basculer.

Les moyens de positionnement en rotation du chariot 6 comprennent un rail circulaire 19 et un deuxième motoréducteur 20 qui est monté en extrémité d'un bras radial 21 solidaire de la traverse 14. Cette dernière est munie, à chacune de ses extrémités, de galets 22 qui reposent sur le rail circulaire 19.

Le bras radial 21 supporte également, de part et d'autre du deuxième motoréducteur 20, un galet qui repose sur le rail circulaire 19. Ces galets ne sont pas représentés sur les Figures.

Le deuxième motoréducteur 20 entraîne un deuxième pignon cranté 23, lequel engrène sur des moyens solidaires du rail circulaire. Ces moyens peuvent notamment être constitués par une courroie crantée 24.

Le motoréducteur 20 peut notamment être du type à courant continu avec frein par manque de courant.

Les moyens de positionnement en rotation comprennent également un dispositif 25 avec contre-galets 25a qui assure en permanence le contact entre le pignon 23 et la courroie 24.

Ces moyens de positionnement en rotation sont communs à toutes les formes de réalisation du dispositif selon l'invention.

Comme on le verra de façon plus précise dans la suite, le chariot 6 permet de supporter des outils d'intervention.

Le positionnement de ces outils et le suivi du déroulement des opérations sont réalisés à l'aide de caméras installées sur les différents éléments de l'ensemble.

Un repérage en début d'opération peut par exemple être réalisé sur trois adaptateurs 4, un étant au centre du couvercle et deux autres sur sa périphérie, à 90° l'un de l'autre. Ce repérage permet de définir les positions sur le rail circulaire 19 et sur la traverse 14 de façon à pouvoir ainsi déterminer la nouvelle position du chariot 6 à obtenir et intervenir sur un autre adaptateur.

Ainsi, les deux motoréducteurs 15 et 20 peuvent par exemple être équipés d'un codeur pour permettre le suivi du déplacement du chariot 6 et le positionnement de celui-ci à l'aplomb de l'adaptateur sur lequel on souhaite intervenir. D'autres moyens peuvent également être prévus.

Ces codeurs assurent ainsi, dans une phase d'approche, le positionnement de l'outil, sensiblement à la verticale du centre de l'adaptateur considéré.

Le positionnement peut être réalisé, en phase finale, par l'intermédiaire de deux visées optiques, par exemple des caméras, disposées dans deux directions correspondant à deux diamètres perpendiculaires.

Ces visées sont orientées vers les diamètres d'extrémité de la manchette thermique portée par l'adaptateur, le positionnement étant effectué en fonction des images sur les écrans de contrôle des deux visées optiques, pour lesquelles un positionnement de référence a été déterminé pour une manchette centrée et une distance déterminée entre l'extrémité inférieure de la manchette et le plateau support pour le porte-outil.

Les visées optiques sont notamment utilisées pour le dispositif décrit en référence aux figures 2 à 5.

On a pu constater que la précision du positionnement en phase finale est de l'ordre de 7/10 de mm.

Les Figures 2 à 5 illustrent une première variante d'un premier mode de réalisation du dispositif selon l'invention. Dans cette première variante, le chariot 6 supporte vers l'avant une console porte-outils 26 qui est constituée par une colonne extérieure 27 de guidage et une colonne interne 28 qui est coaxiale et qui supporte les outils d'intervention 29, 30.

De préférence, on prévoit des moyens assurant le mouvement de translation de la colonne intérieure 28 supportant les outils, par rapport à la colonne extérieure 27 qui est fixe en translation par rapport au chariot 6. Ces moyens comprennent tout d'abord des galets 31 supportés par la colonne de guidage 27 et des glissières prévues sur la colonne interne 28. Ces glissières ne sont pas représentées sur les figures. De préférence, les galets 31 sont au nombre de huit.

Les moyens assurant la translation comprennent de plus un motoréducteur 32 qui est solidaire du bâti 7 du chariot. Ce motoréducteur 32 entraîne un pignon 33 par l'intermédiaire d'une courroie 34. Le pignon 33 est lié en rotation avec l'arbre 9. Sur ce dernier, est claveté un pignon conique 35 qui assure un renvoi d'angle avec les moyens 36. Ceux-ci sont liés en rotation avec une vis 37 ayant le même axe que les colonnes intérieure et extérieure et qui est en prise avec un écrou 38 solidaire de la colonne intérieure 28.

On comprend que la rotation de l'arbre 9 induit la rotation de la vis 37 et donc le mouvement relatif de la colonne intérieure 28 porte-outils par rapport à la colonne extérieure de guidage 27, les glissières étant guidées par les galets 31.

Ces moyens assurant la translation de la colonne intérieure par rapport à la colonne extérieure permettent d'obtenir le réglage en hauteur des outils d'intervention 29, 30 qui sont solidaires de la colonne porte-outils 28.

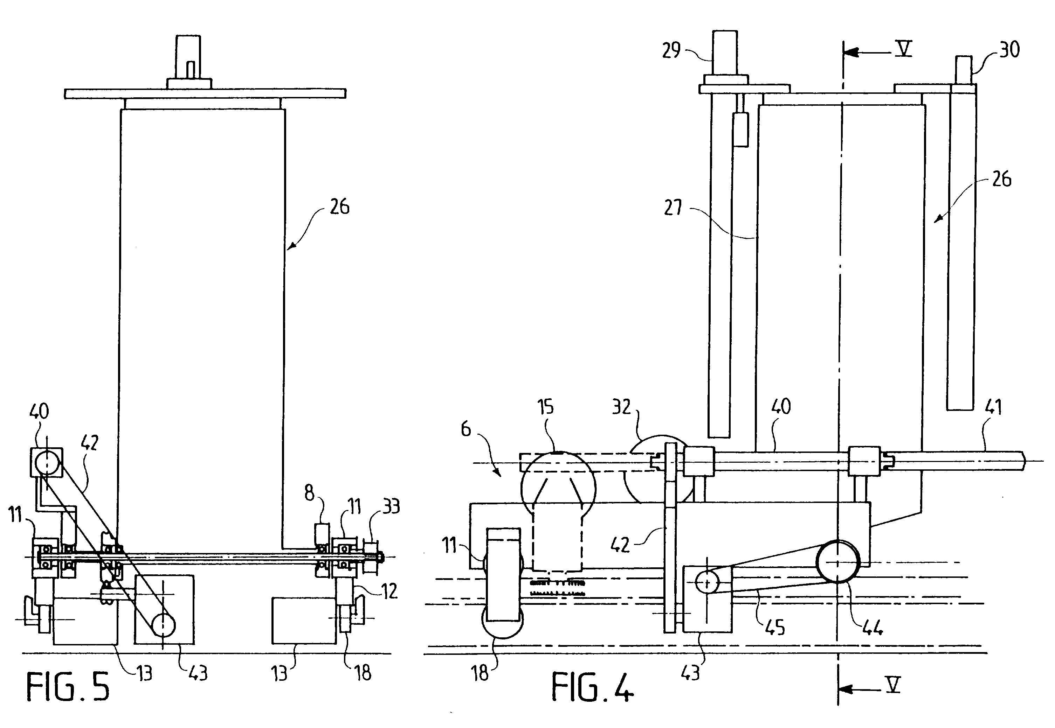

En référence aux Figures 4 et 5, on va maintenant décrire des moyens permettant de basculer la console 26 par rapport au chariot 6. En effet, l'accès 5 qui est ménagé sous le couvercle 2 est généralement de dimensions très faibles. Ainsi, lorsqu'un chariot supporte une console, telle que celle décrite en référence aux Figures 2 et 3, ce chariot risque de ne pas pouvoir être amené sous le couvercle 2 par l'intermédiaire de l'accès 5. Il est donc préférable de prévoir des moyens pour faire basculer la console en position horizontale. Le chariot est alors emmené au droit de l'accès 5 et engagé sur la traverse 14, la console 26 étant postérieurement rebasculée pour être amenée en position verticale.

Les moyens de basculement sont constitués par un arbre de manoeuvre 40 qui peut tourner par rapport au chariot 6. Cet arbre 40 peut par exemple être entraîné par un dispositif manuel, telle qu'une manivelle 41. Ce dispositif 41 peut prendre les deux positions qui sont illustrées à la Figure 4 d'une part, en traits pleins, et d'autre part, en traits pointillés. Cet arbre de manoeuvre 40 entraîne, par l'intermédiaire de la courroie 42, le réducteur 43. L'arbre de sortie du réducteur 43 entraîne en rotation le pignon 44, par l'intermédiaire de la chaîne 45.

Comme l'illustre la Figure 3, le pignon 44 est lié à la console 26 et plus particulièrement la colonne extérieure 27 et il assure ainsi la rotation de la console 26 autour de l'arbre 9.

La console 26 est maintenue en position verticale par l'intermédiaire de verrous et en position horizontale, par l'intermédiaire d'un appui sur butée. Ces deux moyens ne sont pas illustrés sur les Figures.

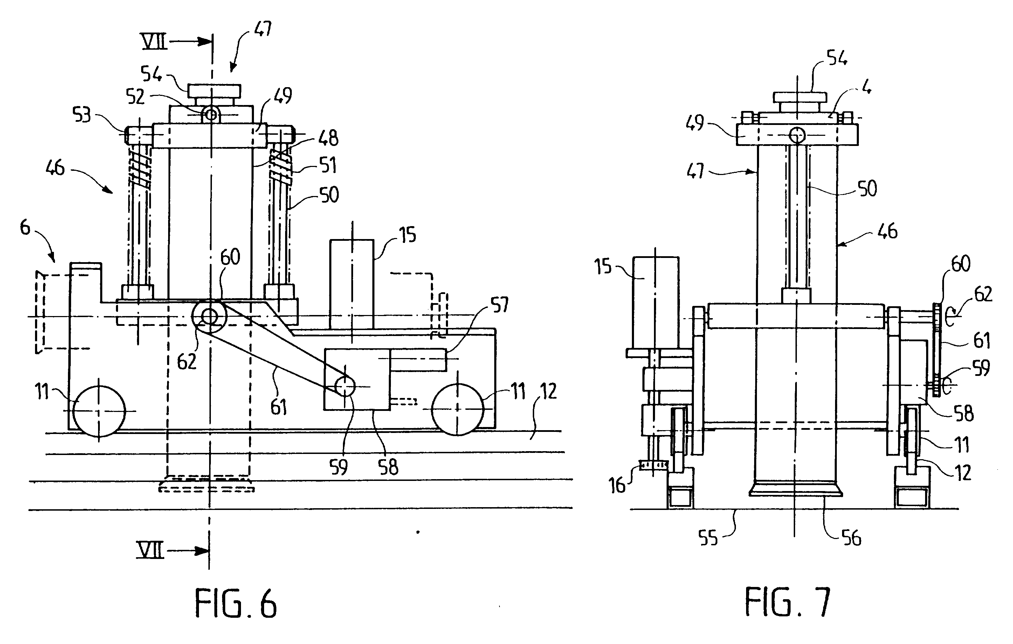

En référence aux Figures 6 et 7, on va maintenant décrire une deuxième variante de réalisation du dispositif selon l'invention. Dans cette deuxième variante, la console 46, supportée par le chariot 6, est constituée par un vérin 47. Le cylindre 48 du vérin est solidaire d'un anneau 49, supporté par deux colonnes 50, par l'intermédiaire de moyens élastiques 51.

L'anneau 49 peut tourner autour de deux axes horizontaux, à 90° l'un de l'autre, par exemple par l'intermédiaire de deux jeux de tourillons 52, 53.

Le fonctionnement de la console 46 est le suivant. On met tout d'abord en action le vérin, la tige 54 montant sous l'action du fluide sous pression. La tige du vérin vient alors en contact avec l'extrémité inférieure d'adaptateur 4. Lorsque l'effort supporté par le vérin devient supérieur à la rigidité admise par les moyens élastiques 51, le cylindre 48 vient en appui sur le sol 55. Ainsi, l'effort est alors repris par le sol et non pas par le chariot.

La rotation autour des deux axes des tourillons 52, 53, permet d'ajuster la position du vérin 47 par rapport à 1' adaptateur sur lequel il doit intervenir.

On peut noter que la partie inférieure du cylindre 48 présente une embase 56 qui est articulée sur le cylindre par l'intermédiaire d'une rotule qui n'est pas représentée sur les Figures. Ainsi, quelque soit l'orientation de la console 46, celle-ci peut venir en appui sur le sol 55 sur toute la surface de l'embase 56.

On utilise cette variante de réalisation du dispositif selon l'invention pour réaliser des essais d'étanchéité.

Les moyens d'entraînement en translation du chariot 6 ne seront pas décrits en détail, pour cette deuxième variante de réalisation. Ils comprennent, comme pour la première variante décrite en référence aux Figures 2 à 5, un motoréducteur 15 qui entraîne un pignon cranté 16, lequel engrène sur des moyens solidaires des rails transversaux 12. On peut remarquer que le motoréducteur 15 est ici en position verticale et non horizontale comme sur les Figures 2 à 5.

Comme pour la première variante de réalisation, on peut prévoir des moyens assurant le basculement de la console 46 par rapport au bâti du chariot, pour faciliter le passage de ce dernier sous le couvercle par l'accès 5.

Ces moyens sont constitués par un motoréducteur 57 qui entraîne un réducteur 58. L'arbre de sortie 59 de ce dernier entraîne en rotation le pignon 60, par l'intermédiaire d'une courroie 61.

Le pignon 60 est lié à la console 46 et assure ainsi sa rotation autour de l'arbre 62. La console vient alors dans la position horizontale, illustrée en traits pointillés à la Figure 6.

La console est maintenue en position horizontale ou verticale, par l'intermédiaire de moyens adaptés qui ne sont pas illustrés sur les Figures.

On peut noter que le motoréducteur 57 peut être remplacé par un dispositif analogue à l'arbre de manoeuvre 40 décrit en référence aux Figures 4 et 5.

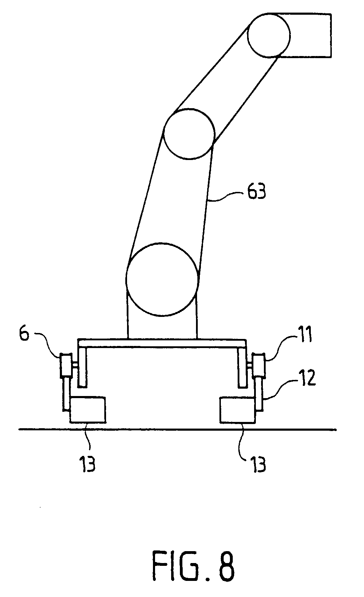

La Figure 8 illustre un deuxième mode de réalisation du dispositif selon l'invention. Dans ce deuxième mode, le chariot 6 ne supporte pas de console mais un ensemble télémanipulateur robotisé 63.

Les moyens d'entraînement en translation du chariot ne sont pas illustrés sur cette Figure. Ils sont analogues à ceux qui ont été décrits en référence aux Figures 2 à 7.

A titre d'exemple d'un tel ensemble robotisé, on peut citer le dispositif de télémanipulation décrit dans le document FR-2 638 386. Un tel dispositif comprend au moins deux bras qui sont repliables sur eux-mêmes. Chaque bras de ce dispositif présente à son extrémité une platine susceptible de recevoir un outil.

Une fois le dispositif selon l'invention sous le couvercle de la cuve, le dispositif de télémanipulation peut se déployer et effectuer toutes les opérations qui seraient normalement effectuées par l'homme.

On comprend que dans ce cas, il n'est pas toujours nécessaire de prévoir un dispositif de basculement, dans la mesure où un tel dispositif de télémanipulation peut se replier sur lui-même et donc présenter des dimensions inférieures à celles de l'accès 5 ménagé sous le couvercle.

Les signes de référence insérés après les caractéristiques techniques mentionnées dans les revendications, ont pour seul but de faciliter la compréhension de ces dernières, et n'en limitent aucunement la portée.

## Revendications

1. Dispositif de support et de positionnement d'outils d'intervention sur des adaptateurs de couvercle de cuve de réacteur nucléaire, destiné à être placé sur une aire de visite dudit couvercle, ledit dispositif comprenant un chariot (6) portant au moins un outil ainsi que des moyens de positionnement en rotation et en translation dudit chariot, qui sont disposés sur ladite aire de visite lorsque le dispositif est en service, les moyens de positionnement en translation comprenant au moins un rail transversal (12), le chariot (6) étant muni de moyens (9, 11, 15) pour son déplacement sur ledit rail transversal (12) et les moyens de positionnement en rotation comprenant un rail circulaire (19) sur lequel le rail transversal (12) est monté mobile, un bras radial (21) fixé à une extrémité audit rail transversal, l'autre extrémité du bras radial (21) étant montée mobile sur le rail circulaire (19), ainsi que des moyens d'entraînement (20, 23) assurant la rotation dudit bras radial (21), laquelle entraîne la rotation du rail transversal (12) sur le rail circulaire (19), ledit chariot et lesdits moyens de positionnement permettant le déplacement dudit outil dans l'espace compris entre la paroi interne du couvercle et l'aire de visite.

2. Dispositif selon la revendication 1 caractérisé en ce qu'il comporte des moyens montés en rotation sur ledit chariot (6) pour basculer ledit outil par rapport audit chariot (6) et le placer en position sensiblement parallèle ou sensiblement perpendiculaire audit rail transversal (12).

3. Dispositif selon l'une des revendications 1 ou 2 caractérisé en ce qu'il comporte des moyens pour la montée ou la descente dudit outil par rapport audit chariot (6).

4. Dispositif selon l'une des revendications 1 à 3, caractérisé en ce que le chariot supporte une console (26, 46).

5. Dispositif selon la revendication 4, caractérisé en ce que les moyens de basculement sont constitués par un arbre de manoeuvre (40) qui entraîne en rotation un réducteur (43), solidaire du bâti (7) du chariot, entraînant lui-même en rotation un pignon (44), lié à la console.

6. Dispositif selon la revendication 5, caractérisé en ce que l'arbre de manoeuvre est remplacé par un motoréducteur (57).

7. Dispositif selon l'une des revendications 4 à 6, caractérisé en ce que la console est constituée par une colonne extérieure (27) de guidage et une colonne intérieure (28) coaxiale, supportant au moins un outil (29, 30).

8. Dispositif selon la revendication 7 caractérisé en ce que les moyens pour la montée ou la descente dudit outil (29, 30) sont constitués par des moyens assurant le mouvement de translation de la colonne intérieure (28) par rapport à la colonne extérieure (27) qui est fixe par rapport au chariot (6).

9. Dispositif selon la revendication 8, caractérisé en ce que les moyens assurant la translation sont constitués par des galets (31), placés entre la colonne intérieure (28) et la colonne extérieure (27), et par un motoréducteur (32), solidaire du bâti (7) du chariot (6), entraînant un pignon (33) lié en rotation avec l'essieu (9) du chariot (6) sur lequel est claveté un pignon conique (35) assurant un renvoi d'angle avec des moyens (36) liés en rotation avec une vis ayant le même axe que les colonnes et qui est en prise avec un écrou (38) lié à la colonne intérieure (28), le mouvement de rotation de la vis (37) assurant ainsi le mouvement de translation de la colonne intérieure (28) par rapport à la colonne extérieure (27).

10. Dispositif selon l'une des revendications 4 à 6, caractérisé en ce que la console (46) est constituée par un vérin (47).

11. Dispositif selon la revendication 10, caractérisé en ce que le cylindre (48) du vérin est solidaire d'un anneau (49) supporté par deux colonnes (50), disposées selon un diamètre, l'anneau (49) pouvant tourner autour de deux axes, à 90° l'un de l'autre, par l'intermédiaire de deux jeux de tourillons (52, 53).

12. Dispositif selon la revendication 11, caractérisé en ce que l'anneau (49) est supporté par les colonnes (50) par l'intermédiaire de moyens élastiques (51).

13. Dispositif selon l'une des revendications 10 à 12, caractérisé en ce que la partie inférieure du cylindre (48) présente une embase (56) qui est articulée sur le cylindre (48) par l'intermédiaire d'une rotule.

14. Dispositif selon l'une des revendications 1 à 3, caractérisé en ce que le chariot (6) supporte un ensemble télémanipulateur robotisé (63).

15. Dispositif selon l'une des revendications 1 à 14, caractérisé en ce que les moyens de positionnement en rotation et en translation comprennent un codeur pour suivre le déplacement dudit chariot (6).

16. Dispositif selon la revendication 15 caractérisé en ce que sont prévues deux visées optiques disposées selon deux directions perpendiculaires et assurant un positionnement précis dudit chariot (6).

## Patentansprüche

1. Vorrichtung zur Halterung und zur Positionierung von Werkzeugen zum Eingriff an Deckeladapters von Kernreaktordruckgefässen, die bestimmt ist, an einem Besichtigungsbereich des besagten Deckels gestellt zu werden, wobei die besagte Vorrichtung einen wenigstens ein Werkzeug tragenden Schlitten (6) sowie Mittel zur Dreh- und Translafionsposifionierung des besagten Schlittens, die auf dem besagten Besichtigungsbereich angeordnet sind, wenn die Vorrichtung in Betrieb ist, wobei die Translafionsposifionierungsmiffel wenigstens eine Querschiene (12) umfassen, wobei der Schlitten (6) mit Mitteln (9, 11, 15) für seine Verschiebung auf der besagten Querschiene (12) versehen ist und die Drehpositionierungsmittel eine kreisförmige Schiene (19), an welcher die Querschiene (12) beweglich angeordnet ist, umfassen, einen an einem Ende der besagten Querschiene befestigten radialen Arm (21), wobei das andere Ende des radialen Armes (21) an der kreisförmigen Schiene (19) bewegbar angeordnet ist, sowie die Drehung des besagten radialen Armes (21) gewährleistende Antriebsmittel (20, 23), welche Drehung die Drehung der Querschiene (12) auf der kreisförmigen Schiene (19) zur Folge hat, aufweist, wobei der besagte Schlitten und die besagten Positionierungsmittel die Bewegung des besagten Werkzeuges in dem zwischen der Innenwand des Deckels und dem Besichtigungsbereich liegenden Raum gestatten.

2. Vorrichtung nach Anspruch 1, dadurch gekennzeichnet, dass sie an dem besagten Schlitten (6) drehbar angeordnete Mittel, um das besagte Werkzeug in bezug auf den besagten Schlitten (6) zu kippen und es in eine zu der besagten Querschiene (12) etwa parallele oder etwa senkrechte Stellung zu stellen, aufweist.

3. Vorrichtung nach einem der Ansprüche 1 oder 2, dadurch gekennzeichnet, dass sie Mittel für die Auf- bzw. Abwärtsbewegung des besagten Werkzeuges in bezug auf den besagten Schlitten (6) aufweist.

4. Vorrichtung nach einem der Ansprüche 1 bis 3, dadurch gekennzeichnet, dass der Schlitten einen Kragträger (26, 46) trägt.

5. Vorrichtung nach Anspruch 4, dadurch gekennzeichnet, dass die Kippmittel durch eine Betätigungswelle (40) gebildet werden, die einen mit dem Rahmen (7) des Schlittens fest verbundenen Drehzahlminderer (43), der selber ein mit dem Kragträger verbundenes Zahnrad (44) zum Drehen antreibt, zum Drehen antreibt.

6. Vorrichtung nach Anspruch 5, dadurch gekennzeichnet, dass die Betätigungswelle durch einen Getriebemotor (57) ersetzt wird.

7. Vorrichtung nach einem der Ansprüche 4 bis 6, dadurch gekennzeichnet, dass der Kragarm durch eine äussere Führungssäule (27) und eine wenigstens ein Werkzeug (29, 30) tragende innere koaxiale Säule (28) gebildet wird.

8. Vorrichtung nach Anspruch 7, dadurch gekennzeichnet, dass die Mittel für die Auf- bzw. Abwärtsbewegung des besagten Werkzeuges (29, 30) durch Mittel gebildet werden, die die Translationsbewegung der inneren Säule (28) in bezug auf die äussere Säule (27), die in bezug auf den Schlitten (6) ortsfest ist, gewährleisten.

9. Vorrichtung nach Anspruch 8, dadurch gekennzeichnet, dass die die Translationsbewegung gewährleistenden Mittel durch zwischen der inneren Säule (28) und der äusseren Säule (27) liegende Rollen (31) und durch einen mit dem Rahmen (7) des Schlittens (6) fest verbundenen Getriebemotor (32) gebildet werden, der ein mit der Radachse (9) des Schlittens (6) drehfest verbundenes Zahnrad (33) antreibt, an welcher Radachse ein Kegelzahnrad (35) aufgekeilt ist, welches die Winkelbewegungsübersetzung mit Mitteln (36) gewährleistet, die mit einer Schraube, die dieselbe Achse wie die Säulen hat und die mit einer mit der inneren Säule (28) verbundenen Mutter (38) in Eingriff steht, drehfest verbunden sind, wobei die Drehbewegung der Schraube (37) somit die Translationsbewegung der inneren Säule (28) in bezug auf die äussere Säule (27) gewährleistet.

10. Vorrichtung nach einem der Ansprüche 4 bis 6, dadurch gekennzeichnet, dass der Tragarm (46) durch einen Kraftzylinder (47) gebildet wird.

11. Vorrichtung nach Anspruch 10, dadurch gekennzeichnet, dass der Zylinder (48) des Kraftzylinders mit einem durch zwei entlang eines Durchmessers angeordnete Säulen (50) getragenen Ring (49) fest verbunden ist, wobei der Ring (49) um zwei rechtwinkelig zueinander stehenden Achsen über zwei Sätze von Drehzapfen (52, 53) drehbar ist.

12. Vorrichtung nach Anspruch 11, dadurch gekennzeichnet, dass der Ring (49) von den Säulen (50) über elastische Mittel (51) getragen wird.

13. Vorrichtung nach einem der Ansprüche 10 bis 12, dadurch gekennzeichnet, dass der untere Abschnitt des Zylinders (48) einen Grundteil (56), der an dem Zylinder (48) über ein Kugelgelenk angelenkt ist, aufweist.

14. Vorrichtung nach einem der Ansprüche 1 bis 3, dadurch gekennzeichnet, dass der Schlitten (6) eine durch Roboter ferngesteuerte Manipulatoreinheit (63) trägt.

15. Vorrichtung nach einem der Ansprüche 1 bis 14, dadurch gekennzeichnet, dass die Dreh- und Translationspositionerungsmittel einen Codierer zum Verfolgen der Bewegung des besagten Schlittens (6) umfassen.

16. Vorrichtung nach Anspruch 15, dadurch gekennzeichnet, dass zwei entlang zwei einander senkrechten Richtungen angeordnete und eine genaue Positionierung des besagten Schlittens (6) gewährleistende optische Visiereinrichtungen vorgesehen sind.

## Claims

1. Device for holding and positioning intervening tools onto nuclear reactor vessel cover adaptors and intended to be placed onto an inspection area of the said cover, the said device comprising a carriage (6) carrying at least one tool as well as means for positioning the said carriage in rotation and in translation, which are disposed upon the said inspection area when the device is in use, the means for positioning in translation comprising at least one transverse rail (12), the carriage (6) being provided with means (9, 11, 15) for its displacement upon the said transverse rail (12) and the means for positioning in rotation comprising a circular rail (19) onto which the transverse rail (12) is movably mounted, a radial arm (21) fastened with one end to the said transverse rail, the other end of the radial arm (21) being movably mounted onto the circular rail (19) as well as drive means (20, 23) insuring the rotation of the said radial arm (21), which rotation results in the rotation of the transverse rail (12) on the circular rail (19), the said carriage and the said positioning means permitting the displacement of the said tool in the space lying between the internal wall of the cover and the inspection area.

2. Device according to claim 1, characterized in that it comprises means mounted for rotation onto the said carriage (6) for tilting the said tool with respect to the said carriage (6) and for placing it in a position substantially parallel or substantially perpendicular to the said transverse rail (12).

3. Device according to one of claims 1 or 2, characterized in that it comprises means for the rising or the lowering of the said tool with respect to the said carriage (6).

4. Device according to one of claims 1 to 3, characterized in that the carriage supports a bracket (26, 46).

5. Device according to claim 4, characterized in that the tilting means are constituted by an operating shaft (40) which rotates a reducer (43) made fast to the frame (7) of the carriage and itself rotating a gear (44) connected to the bracket.

6. Device according to claim 5, characterized in that the operating shaft is replaced with a motor-reducer (57).

7. Device according to one of claims 4 to 6, characterized in that the bracket is constituted by an outer guide column (27) and an inner coaxial column (28) supporting at least one tool (29, 30).

8. Device according to claim 7, characterized in that the means for the upward or downward motion of the said tool (29, 30) are constituted by means insuring the translational movement of the inner column (28) with respect to the outer column (27) which is stationary with respect to the carriage (6).

9. Device according to claim 8, characterized in that the means insuring the translation are constituted by rollers (31) placed between the inner column (28) and the outer column (27) and by a motor-reducer (32) made fast to the frame (7) of the carriage (6), driving a pinion (33) connected to for rotation with the axle (9) of the carriage (6) onto which is keyed a bevel gear (35) insuring a counter-motion with means (36) connected to for rotation with a screw having the same axis as the columns and which is in engagement with a nut (38) connected to the inner column (28), the rotary movement of the screw (37) thus insuring the translational movement of the inner column (28) with respect to the outer column (27).

10. Device according to one of claims 4 to 6, characterized in that the bracket (46) is constituted by a jack (47).

11. Device according to claim 10, characterized in that the cylinder (48) of the jack is made fast to a ring (49) supported by two columns (50) disposed along one diameter, and the ring (49) may turn about two axes at right angles to each other through the medium of two sets of journal pins (52, 53).

12. Device according to claim 11, characterized in that the ring (49) is supported by the columns (50) through the medium of elastic means (51).

13. Device according to one of claims 10 to 12, characterized in that the lower portion of the cylinder (48) exhibits a base (56) which is pivotally connected onto the cylinder (48) through the medium of a ball-and-socket joint.

14. Device according to one of claims 1 to 3, characterized in that the carriage (6) supports a robotized telemanipulator unit (63).

15. Device according to one of claims 1 to 14, characterized in that the means for rotary and translational positioning comprise an encoder for following the displacement of the said carriage (6).

16. Device according to claim 15, characterized in that there are provided two optical sightings disposed according two perpendicular directions and ensuring a precise positioning of the said carriage (6).
